# EUROPEAN PATENT APPLICATION

(11) **EP 4 296 045 A1**
(43) Date of publication of application: **27.12.2023**
(21) Application number: 23179947.9
(22) Date of filing: 19.06.2023
(51) Int. Cl.: B29C 73/26

(54) **TIRE REPAIR TOOL**

(30) Priority: 23.06.2022 US 202263354920 P; 14.06.2023 US 202318209594
(71) Applicant: Illinois Tool Works Inc., Glenview IL 60025 (US)
(72) Inventor: SANGSTER, Brendan, Glenview, 60025 (US); COSTLE, Carey Christopher, Glenview, 60025 (US); ENRIQUEZ, Heriberto, Glenview, 60025 (US); ELLMAN, Chad Daniel, Glenview, 60025 (US)
(74) Representative: HGF

(57) **Abstract**

A tire repair tool includes a reamer (40) and/or a plugger (50) having a hex end (30) for connection with a power tool.

## Description

### CROSS REFERENCE TO RELATED APPLICATION

This application claims the benefit of U.S. Provisional Application, Serial No. 63/354,920, filed on 23 June 2022. The co-pending provisional application is hereby incorporated by reference herein in its entirety and is made a part hereof, including but not limited to those portions which specifically appear hereinafter.

### BACKGROUND OF THE INVENTION

### FIELD OF THE INVENTION

This invention relates to a tire repair tool and kit, specifically a reamer and plugger for repairing leaking tires.

### DESCRIPTION OF RELATED ART

Tire repair kits are generally used to patch a leaking hole in a pneumatic tire. A rubber plug is typically included in such kits and is inserted into the hole to prevent further leaking. Typical tire repair kits include a reamer for reaming and roughening a hole, a plugger for inserting the rubber plug into the hold, one or more rubber plugs and an adhesive for inserting into the hole. The process generally involves locating the hole in the tire through visual or audible inspection; reciprocating the reamer within the hole to prepare and roughen the hole for the plug; inserting a plug into the plugger with or without an adhesive addition; inserting the plugger into the hole; and removing the plugger while leaving the plug in the hole intact to thereby patch the hole.

Existing tire repair kits may include a manual reamer and plugger as well as the plugs and adhesive. Separate reamer and plugger tools are typically provided that may include a T-handle or a screwdriver style handle. Such handles may provide difficulties for the user in inserting the reamer or plugger into the tire and/or rotating and/or removing the tools while in use.

### SUMMARY OF THE INVENTION

The present invention is directed to a tire repair tool in the form of a reamer for reaming out a hole in a tire and a plugger for feeding a plug into the hole wherein one or both of the reamer and the plugger include a hex end for engagement with a power drill or similar tool.

In accordance with one embodiment, there is provided a tool that includes at least one and preferably two bits. The bits preferably include a reamer bit and a plugger bit and/or a combination reamer/plugger bit.

The reamer bit preferably comprises a shaft with a pointed distal end, a textured surface along the shaft for conditioning an inner surface of a hole to be patched, and a hex end at a proximal end of the shaft. The plugger bit preferably includes a shaft having a loop with a split or slotted distal end wherein a plug may be inserted and released within the hole, and a hex end at a proximal end of the shaft. The two bits can be included in a unitized kit together with rubber plugs and adhesive.

A combination of these two bits may be unitized into a single bit wherein the shaft includes a pointed loop with split or slotted distal end and a textured surface along the shaft with a hex end at the proximal end of the shaft. In this latter embodiment, a single tool can accomplish a patching task that previously required two separate tools.

### BRIEF DESCRIPTION OF THE DRAWINGS

The above-mentioned and other features and objects of this invention will be better understood from the following detailed description taken in conjunction with the drawings wherein:
FIG. 1 is a front perspective view of a tire repair tool according to one preferred embodiment;
FIG. 2 is a front view of the tire repair tool shown in FIG. 1;
FIG. 3 is a top view of the tire repair tool shown in FIG. 1;
FIG. 4 is a front perspective view of a tire repair tool according to one preferred embodiment;
FIG. 5 is a front view of the tire repair tool shown in FIG. 1;
FIG. 6 is a side view of the tire repair tool shown in FIG. 1;
FIG. 7 is a top view of the tire repair tool shown in FIG. 1;
FIG. 8 is a front view of a tire repair tool according to one preferred embodiment; and
FIG. 9 is a front view of a tire repair kit according to one preferred embodiment.

### DESCRIPTION OF PREFERRED EMBODIMENTS

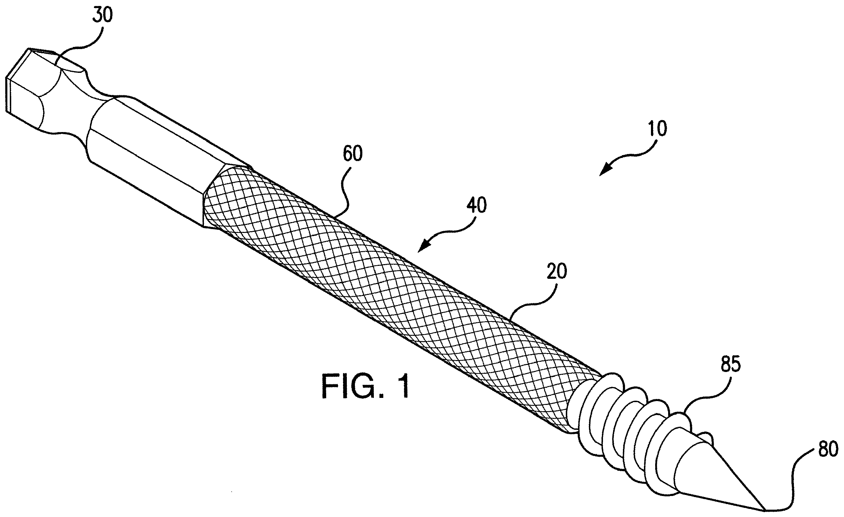

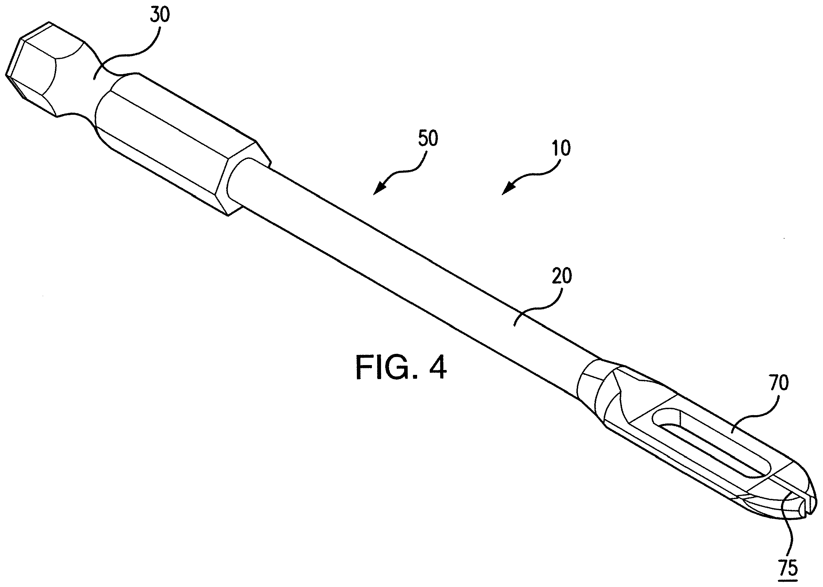

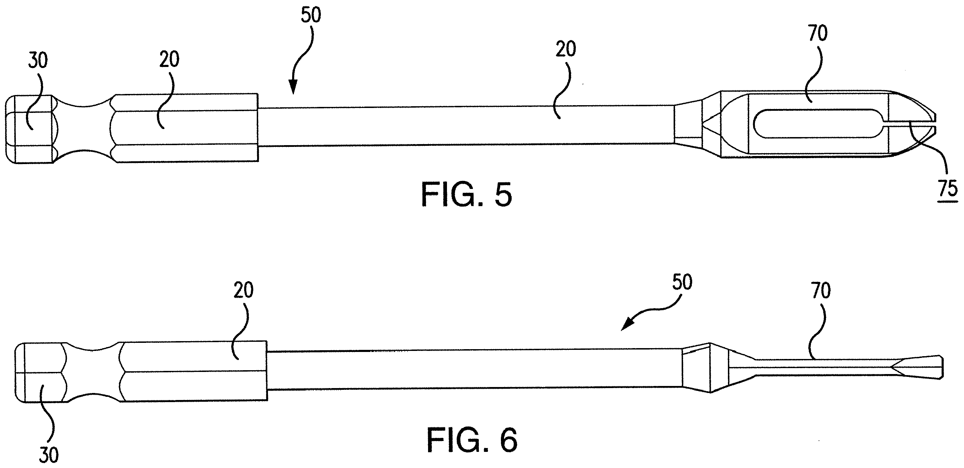

Figs. 1-9 show a tire repair tool 10, namely a reamer 40 and/or a plugger 50 according to preferred embodiments. As used herein, the tire repair tool 10 may be a single bit, multiple bits, and/or a kit that are used to repair a tire. Specifically, the reamer 40 and the plugger 50 are preferably used in tandem and in connection with the repair of a leaking or damaged tire. While the broader practice of the invention is not necessarily limited to use with or in connection with the repair of tires, the invention is believed to have particular applicability for use in conjunction with the repair of air-filled objects such as tires, tubes, rafts, air mattresses, inflatable flotation devices or similar inflatable devices such as may find common application.

A tire repair tool as shown in Figs. 1-9 preferably includes one or two bits, specifically a reamer 40 and/or a plugger 50. The bits 40, 50 each preferably include a shaft 20 having a distal end and a proximal end. As used herein, the distal end is an end of the bit 40, 50 that first engages with the tire and the proximal end is an end of the bit 40, 50 that engages with a user/power tool. The bits 40, 50 are preferably constructed of a rigid material such as steel to withstand vigorous and repeated use of the tire repair tool 10.

The bits 40, 50 preferably include a hex end 30 formed in the proximal end of the shaft 20. The hex end 30 is preferably engageable with a power tool, specifically a rotating (vs. reciprocating) power tool such as a drill or rotary tool. The preferred power tool preferably includes a chuck for engagement with the hex end 30 of the tire repair tool 10. Alternatively, a simple hex fitting may engage with the hex end 30. The power tool and associated action of the power tool preferably permits a firm gripping engagement of the bit 40, 50 and generates torque, downward force and/or upward force for use and operation of the tire repair tool 10.

Bits 40, 50, such as shown in Figs. 1-9, are preferably connected with respect to the power tool and preferably include the shaft 20 with the hex end 30 fixed into position at the proximal end of the bit 40, 50 within a standard releasable chuck of the power tool. The bits 40, 50 are preferably removably inserted into the chuck.

The reamer 40 (or "reamer element" or "reamer bit") is used to roughen up an inner perimeter of the hole in the tire and create a surface that is bondable with a tire plug. As such, the reamer 40 preferably includes a surface texture 60 along at least a portion of the shaft 20. Specifically, the surface texture 60 may be knurled or otherwise ridged, milled or knotted to create a rough surface that, when engaged with a tire, will create a surface area that is conducive to retaining and adhering to a plug 110.

According to one preferred embodiment, the reamer 40 includes a pointed end or point 80 at the distal end of the shaft 20. The point 80 permits easy initial insertion of the reamer 40 into the tire. However, once initially inserted a standard manual tool may be difficult to move within the tire for some users. As such, in addition to the point 80, the reamer 40 may include a spiral thread 85 that preferably extends from the point 80 in a direction toward the proximal end of the shaft 20. However, the spiral thread 85 does not extend fully to the proximal end of the shaft 20 as explained below. The spiral thread 85 preferably includes a diameter larger than a diameter of the shaft 20 and assists in urging augering the reamer 40 into the hole in the tire when powered and rotated by the power tool.

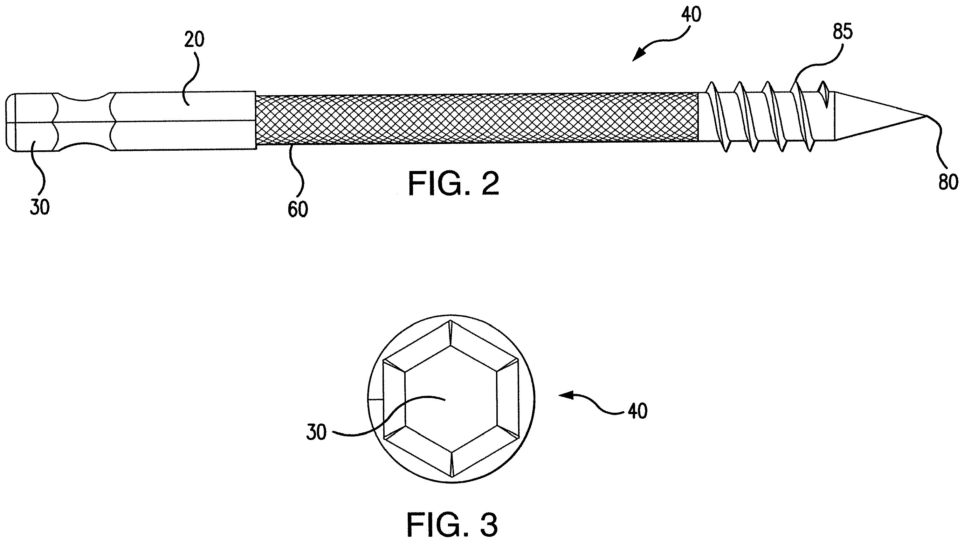

The textured surface 60 is preferably positioned along the shaft 20 in a desired position and length to permit the reaming operation while enabling sufficient space along the shaft 20 for engagement between the hex end 30 and the power tool. As shown in Figs. 1 and 2, once the reamer 40 is fully inserted past the spiral thread 85, the surface texture 60 on the shaft 20 preferably extends entirely between an end of the spiral thread 85 and the hex end 30.

The plugger 50 (or "plugger element" or "plugger bit") preferably includes a looped end 70 at the distal end of the shaft 20. The looped end 70 is desirably elongated to permit insertion and removal of the tire repair tool 10 within the hole to be repaired while still permitting insertion of the plug 110 within the looped end 70 and removal of the plug 110 within the hole following the patching operation. A plug 110 is preferably inserted into the looped end 70 prior to insertion into the tire. The plugger 50 may further include a split 75 at the distal end of the shaft 20. The split 75 is preferably configured to permit the plug 110 to release from the plugger 50 following insertion of the plug into the hole in the tire. In this manner, the plugger 50 preferably includes an open loop at the looped end 70. In a preferred operation, the plug 110 may be a single thickness or a double thickness following insertion into the tire and removal of the plugger 50.

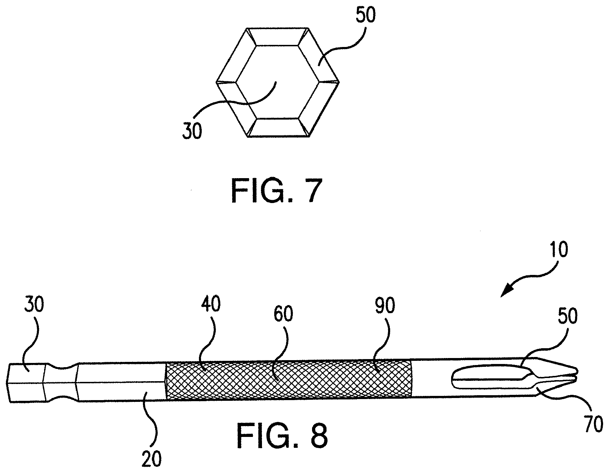

Fig. 8 shows one embodiment wherein the tire repair tool 10 includes both a reamer element 40 and a plugger element 50. As shown, the tire repair tool 10 includes a shaft 20 having a hex end 30 at a proximal end, a reamer element 40 along the shaft, and a plugger element 50 at a distal end of the shaft 20, wherein the reamer element 40 includes a surface texture 60 and the plugger element 50 includes a narrowed looped end 70.

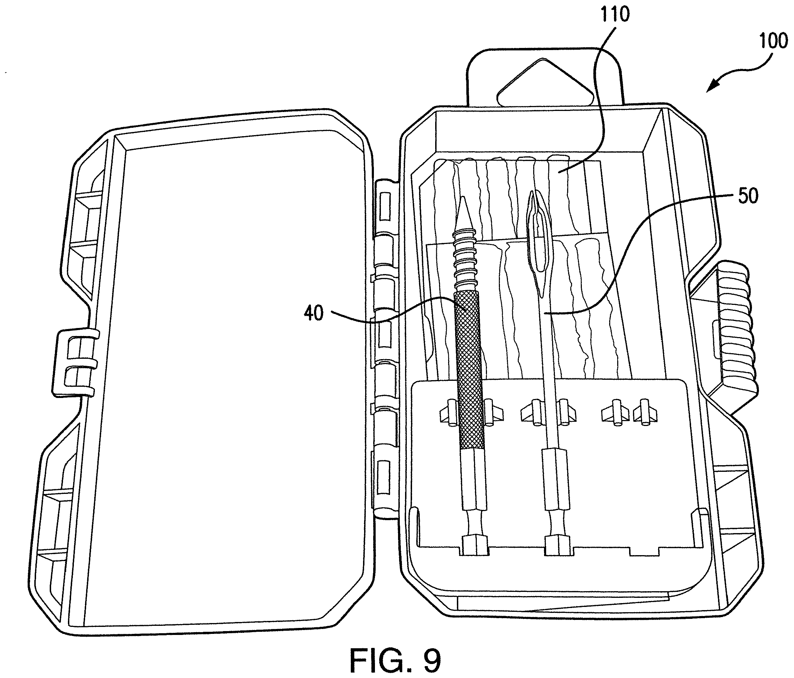

The tire repair tool kit 100, as shown in Fig. 9, accordingly includes both a reamer bit 40 and a plugger bit 50 for quick and efficient patching of a leaking tire. In practice, an associated method of patching a tire includes the steps of: locating a hole in a tire; connecting the reamer 40 to a power tool, the reamer 40 having a hex end 30 at a proximal end for connection to the power tool; activating the power tool and inserting the distal end of the reamer 40 into the hole and reciprocating the reamer 40 within the hole; removing the reamer 49 from the power tool; connecting the plugger 50 to the power tool at the hex end 30 and inserting a plug 110 into the looped end 70; and inserting the plugger 50 into the hole and releasing the plug 110 into the hole. Both the reamer 40 and the plugger 50 may be urged into the hole in the tire with the activation of the power tool, such as a drill.

Certain embodiments of the invention are described in the following numbered clauses.
Clause 1. A tire repair tool comprising:
   a shaft having a distal end and a proximal end;
   a hex end formed in the proximal end of the shaft;
   at least one of a reamer element having a surface texture along at least a portion of the shaft and a plugger element having a looped end at the distal end of the shaft.
Clause 2. The tire repair tool of Clause 1 wherein the texture comprises a knurled shaft.
Clause 3. The tire repair tool of Clause 1 wherein the reamer element further comprises a pointed end at the distal end of the shaft and a spiral thread extending therefrom.
Clause 4. The tire repair element of Clause 3 wherein the surface texture extends entirely between an end of the spiral thread and the hex end.
Clause 5. The tire repair tool of Clause 1 wherein the plugger element further comprises a split at the distal end of the shaft.
Clause 6. The tire repair tool of Clause 1 wherein the looped end comprises an open loop.
Clause 7. The tire repair tool of Clause 1 wherein the hex end is configured to engage with a drill chuck.
Clause 8. The tire repair tool of Clause 1 comprising both a reamer element and a plugger element.
Clause 9. The tire repair tool of Clause 1 provided in a kit with a reamer element bit, a plugger element bit and rubber plugs.
Clause 10. A tire repair tool comprising a shaft having a hex end at a proximal end, a reamer element along the shaft, and a plugger element at a distal end of the shaft, wherein the reamer element includes a surface texture and the plugger element includes a narrowed looped end.
Clause 11. The tire repair tool of Clause 10 wherein the surface texture of the reamer element comprises a knurled surface along the shaft.
Clause 12. The tire repair tool of Clause 10 wherein the plugger element includes a split opening at the distal end.
Clause 13. A method of patching a tire comprising the steps of:
   locating a hole in a tire;
   connecting a bit having a reamer element to a power tool, the reamer element having a hex end at a proximal end for connection to the power tool, a surface texture along a shaft of the bit, and a pointed distal end;
   activating the power tool and inserting the distal end of the bit having the reamer element into the hole and reciprocating the reamer element within the hole;
   removing the bit having the reamer element from the power tool;
   connecting a bit having a plugger element to the power tool, the plugger element having a hex end at a proximal end, and a looped end at a distal end of the bit;
   inserting a plug into the plugger element within a looped end at a distal end of the bit; and
   inserting the distal end of the bit having the plugger element into the hole and releasing the plug into the hole.
Clause 14. The method of Clause 13 wherein the reamer element further comprises a spherical thread and the step of rotating the reamer element into the hole along the thread with the power tool until the surface texture of the shaft engages with the hole.
Clause 15. The method of Clause 13 wherein the plugger element is urged into the hole with the activation of the power tool.
Clause 16. The method of Clause 13 wherein the power tool comprises a drill.
Clause 17. The method of Clause 13 wherein the distal end of the plugger element includes a split looped end.

While in the foregoing specification this invention has been described in relation to certain preferred embodiments thereof, and many details have been set forth for purposes of illustration, it will be apparent to those skilled in the art that the invention is susceptible to additional embodiments and that certain of the details described herein can be varied considerably without departing from the basic principles of the invention.

## Claims

1. A tire repair tool comprising:
a shaft having a distal end and a proximal end;
a hex end formed in the proximal end of the shaft;
at least one of a reamer element having a surface texture along at least a portion of the shaft and a plugger element having a looped end at the distal end of the shaft.

2. The tire repair tool of Claim 1 wherein the texture comprises a knurled shaft.

3. The tire repair tool of Claim 1 wherein the reamer element further comprises a pointed end at the distal end of the shaft and a spiral thread extending therefrom and optionally wherein the surface texture extends entirely between an end of the spiral thread and the hex end.

4. The tire repair tool of Claim 1 wherein the plugger element further comprises a split at the distal end of the shaft.

5. The tire repair tool of Claim 1 wherein the looped end comprises an open loop.

6. The tire repair tool of Claim 1 wherein the hex end is configured to engage with a drill chuck.

7. The tire repair tool of Claim 1 comprising both a reamer element and a plugger element.

8. The tire repair tool of Claim 1 provided in a kit with a reamer element bit, a plugger element bit and rubber plugs.

9. A tire repair tool comprising a shaft having a hex end at a proximal end, a reamer element along the shaft, and a plugger element at a distal end of the shaft, wherein the reamer element includes a surface texture and the plugger element includes a narrowed looped end.

10. The tire repair tool of Claim 9 wherein the surface texture of the reamer element comprises a knurled surface along the shaft.

11. The tire repair tool of Claim 9 wherein the plugger element includes a split opening at the distal end.

12. A method of patching a tire comprising the steps of:
locating a hole in a tire;
connecting a bit having a reamer element to a power tool, the reamer element having a hex end at a proximal end for connection to the power tool, a surface texture along a shaft of the bit, and a pointed distal end;
activating the power tool and inserting the distal end of the bit having the reamer element into the hole and reciprocating the reamer element within the hole;
removing the bit having the reamer element from the power tool;
connecting a bit having a plugger element to the power tool, the plugger element having a hex end at a proximal end, and a looped end at a distal end of the bit;
inserting a plug into the plugger element within a looped end at a distal end of the bit; and
inserting the distal end of the bit having the plugger element into the hole and releasing the plug into the hole.

13. The method of Claim 12 wherein the reamer element further comprises a spherical thread and the step of rotating the reamer element into the hole along the thread with the power tool until the surface texture of the shaft engages with the hole or wherein the plugger element is urged into the hole with the activation of the power tool.

14. The method of Claim 12 wherein the power tool comprises a drill.

15. The method of Claim 12 wherein the distal end of the plugger element includes a split looped end.
